Europäisches Patentamt

European Patent Office

Office européen des brevets

(11) Veröffentlichungsnummer: **0 330 112**

**A1**

(12) **EUROPÄISCHE PATENTANMELDUNG**

(21) Anmeldenummer: 89102872.2

(51) Int. Cl.4: **B23D 77/00 , B23B 51/02**

(22) Anmeldetag: 20.02.89

(30) Priorität: 24.02.88 DE 3805727

(43) Veröffentlichungstag der Anmeldung:
30.08.89 Patentblatt 89/35

(84) Benannte Vertragsstaaten:
AT DE ES FR GB IT SE

(71) Anmelder: H. WILLY KRAUSS GMBH & CO.
METALLWAREN- UND WERKZEUGFABRIK
Kelheimer Strasse 31
D-8432 Beilngries(DE)

(72) Erfinder: Krauss, Helmut, Dipl.-Ing.
Bartningallee 26
D-1000 Berlin -21(DE)

(74) Vertreter: LOUIS, PÖHLAU, LOHRENTZ &
SEGETH
Kesslerplatz 1 Postfach 3055
D-8500 Nürnberg(DE)

(54) Bohr- oder Reibwerkzeug.

(57) Es wird ein Werkzeug (10) in Form eines konischen Bohrers bzw. in Form einer konischen Reibahle beschrieben, das Schneidrippen (12) und Spanrillen (14) aufweist, die sich entlang des Umfangs des
Werkzeugs (10) abwechseln. Die Schneidrippen (12)
und die Spanrillen (14) können einen Drall aufweisen
oder zur Längsachse (24) des Werkzeugs (10) parallel geradlinig verlaufen. Jede Schneidrippe (12) weist
eine Spanfläche (18) und eine Freifläche (20) auf,
die sich in einer Schneidkante (22) schneiden. Die
Spanfläche (18) schliesst mit einer ersten Bezugsebene (26) einen Spanwinkel (s) und die Freifläche
(20) schliesst mit einer zur ersten Bezugsebene (20)
senkrechten zweiten Bezugsebene (28) einen Freiwinkel (f) ein. Um bei einem derartigen Werkzeug
(10) die Spanabnahme von einem zu bearbeitenden
Werkstück und den Spanabfluss zu verbessern, ist
der Freiwinkel (f) jeder Schneidrippe (12) vom sich
in Längsrichtung des Werkzeugs (10) ändernden
Durchmesser (D) der Mantelfläche (34), die von den
Schneidkanten (22) des konischen Werkzeugs (10)
während einer Rotation desselben um seine zentrale
Längsachse (24) herum festgelegt wird, abhängig.

FIG.3

## Bohr- oder Reibwerkzeug

Die Erfindung betrifft ein Werkzeug in Form eines konischen Bohrers bzw. insbesondere in Form einer konischen Reibahle, mit Schneidrippen, die mit ihren Schneidkanten bei einer Rotation des Werkzeugs um seine zentrale Längsachse eine konische Mantelfläche festlegen, und mit Spanrillen, wobei sich die Schneidrippen und die Spanrillen entlang des Umfangs des Werkzeugs erstrecken, und jede Schneidrippe eine Spanfläche und eine Freifläche aufweist, wobei sich die Spanfläche und die Freifläche in der gegebenenfalls mit einer Rundschliffphase versehenen Schneidkante der entsprechenden Schneidrippe schneiden und miteinander einen Keilwinkel einschliessen, und die Spanfläche mit einer sich durch die Längsachse des Werkzeugs und die entsprechende Schneidkante erstreckenden ersten Bezugsebene einen Spanwinkel und die Freifläche mit einer zur ersten Bezugsebene senkrechten, sich durch die entsprechende Schneidkante ersteckenden zweiten Bezugsebene einen Freiwinkel einschliesst.

Bei solchen konischen Bohrern oder konischen Reibahlen ist der Freiwinkel entlang der Längsachse des Werkzeugs konstant. Der Freiwinkel wird dabei beim kleinsten Durchmesser des Werkzeugs, d.h. beim kleinsten Durchmesser der konischen Mantelfläche festgelegt, weil in diesem Abschnitt des Werkzeugs der Freiwinkel infolge der Ausdehnung der Freifläche einen bestimmten Wert nicht unterschreiten kann, ohne dass die Spanabnahme von einem zu bearbeitenden Werkstück beeinträchtigt wird. Bei jedem grösseren als dem Mindestdurchmesser des konischen Werkzeugs ergibt sich dann infolge des entlang des gesamten Werkzeugs konstanten Freiwinkels eine Freifläche, die von der Mantelfläche immer weiter beabstandet ist, je grössere der Durchmesser der Mantelfläche im Vergleich zum Mindestdurchmesser wird. Bei grösser werdendem Durchmesser der konischen Mantelfläche wird somit der zwischen der Mantelfläche und der Freifläche gegebene Freiraum unnötigerweise immer grösser. Andererseits ist durch den Freiwinkel bei einem bestimmten Keilwinkel jeder Schneidrippe der Spanwinkel der/jeder Schneidrippe festgelegt, so dass bei den bekannten konischen Werkzeugen der oben genannten Art bei konstantem Freiwinkel auch der Spanwinkel entlang jeder Schneidrippe konstant bleibt, wenn jede Schneidrippe einen konstanten Keilwinkel entlang seiner Längserstreckung aufweist. Ein konstanter Keilwinkel jeder Schneidrippe ist deshalb wünschenswert und üblich, weil nur auf diese Weise eine gleichmässige Abnutzung der Schneidrippen gewährleistet wird. Demzufolge ist bei den bekannten Werkzeugen in Form konischer Bohrer bzw. in Form konischer Reibahlen der Spanwinkel vom jeweiligen Durchmesser der konischen Mantelfläche des Werkzeugs unabhängig und gleich gross. Daraus resultiert jedoch eine Spanabnahme von dem zu bearbeitenden Werkstück und ein Spanfluss über das konische Werkzeug, der entlang des konischen Werkzeugs überall gleich ist.

Der Erfindung liegt deshalb die Aufgabe zugrunde, die Spanabnahme von einem zu bearbeitenden Werkstück und den Spanfluss über das konische Werkzeug zu verbessern.

Diese Aufgabe wird erfindungsgemäss dadurch gelöst, dass der Freiwinkel jeder Schneidrippe vom sich in Längsrichtung des Werkzeugs ändernden Durchmesser der Mantelfläche abhängig ist. Der Freiwinkel jeder Schneidrippe ist also nicht entlang des gesamten Werkzeugs konstant, sondern er ändert sich mit dem Durchmesser des konischen Werkzeugs, d.h. mit dem Durchmesser der Mantelfläche, die bei einer Rotation des Werkzeugs um seine zentrale Längsachse von den Schneidkanten der Schneidrippen bestimmt wird.

Der Freiwinkel jeder Schneidrippe ist vorzugsweise zum jeweiligen Durchmesser der Mantelfläche umgekehrt proportional. Das bedeutet, dass der Freiwinkel bei einem kleinen Durchmesser der konischen Mantelfläche bzw. bei einem kleinen Durchmesser des konischen Werkzeugs relativ gross und bei einem grossen Durchmesser im Vergleich dazu vergleichsweise klein ist. Von Wichtigkeit ist dabei nur, dass der zwischen der Freifläche und der Mantelfläche gegebene Freiraum bei den verschiedenen Durchmessern des Werkzeugs mindestens annähernd gleich gross ist.

Bei einer anderen Ausbildung des erfindungsgemässen Werkzeugs ist der Freiwinkel jeder Schneidrippe vorzugsweise innerhalb bestimmter Längsabschnitte des Werkzeugs von einem Durchmesser des Mantelfläche dieses Abschnittes abhängig und konstant. Bei einem solchen Werkzeug ändert sich der Freiwinkel also nicht entsprechend der linearkonischen Ausbildung des Werkzeugs, d.h. der Mantelfläche des Werkzeugs in Längsrichtung des Werkzeugs linear, sondern stufenweise.

Als zweckmässig hat es sich erwiesen, dass der Keilwinkel jeder Schneidrippe mindestens annähernd konstant ist, so dass der Spanwinkel von dem sich in Längsrichtung des Werkzzeugs ändernden Durchmesser der Mantelfläche proportional abhängig ist. Infolge des über die gesamte Länge des Werkzeugs und damit vom jeweiligen Durchmesser unabhängigen keilwinkels ergibt sich entlang des geamten konischen Werkzeugs eine gleichmässige Abnutzung und damit eine vergleichsweise gut Standzeit des Werkzeugs. Andererseits kann durch die erfindungsgemässe Ausbildung des Werkzeugs mit einem Freiwinkel der einzelnen Schneidrippen, der zum jeweiligen Durchmesser des Werkzeugs,d.h. der konischen Mantelfläche umgekehrt proportional ist, der Spanwinkel der Spanfläche der jeweiligen Schneidrippe entlang Abschnitten relativ grossen Durchmessers im Vergleich zum Spanwinkel eines Abschnittes kleinen Durchmessers des Werkzeugs vergleichsweise gross sein. Das heisst, der Spanwinkel nimmt von Abschnitten kleinen Durchmessers zu Abschnitten des Werkzeugs mit einem grossen Durchmesser zu. Diese Zunahme kann bei entsprechender Dimensionierung des Freiwinkels kontinuierlich oder stufenweise sein. Durch den sich entlang des Werkzeugs ändernden Spanwinkel jeder Spanfläche ergibt sich nicht nur eine Verbesserung der Spanabnahme von einem zu bearbeitenden Werkstück, sondern gleichzeitig auch eine Lenkung des Spanabflusses in radialer als auch in Längsrichtung des Werkzeugs. Dadurch kann ein Verstopfen der Spanrillen im Vergleich zu bekannten Werkzeugen der gattungsgemässen Art besser verhindert werden.

Weitere Einzelheiten, Merkmale und Vorteile ergeben sich aus der nachfolgenden Beschreibung eines in der Zeichnung dargestellten Ausführungsbeispieles eines erfindungsgemässen Werkzeugs in Form einer konischen Reibahle. Es zeigt:

Fig. 1 eine Seitenansicht einer Reibahle, bei der die Schneidrippen und die Spanrillen einen Drall aufweisen,

Fig. 2 einen Schnitt entlang der Schnittlinie II-II aus Fig. 1,

Fig. 3 eine stark vergrösserte Darstellung zweier Schneidrippenabschnitte, deren Schneidkanten unterschiedliche Durchmesser aufweisen,

Fig. 4 eine räumliche Darstellung der von den Schneidkanten der Schneidrippen während einer Rotation des Werkzeugs um seine Längsachse gebildeten konischen Mantelfläche, und

Fig. 5 eine grafische Darstellung der Abhängigkeit des Freiwinkels f und des Spanwinkels s in axialer Richtung des Werkzeugs.

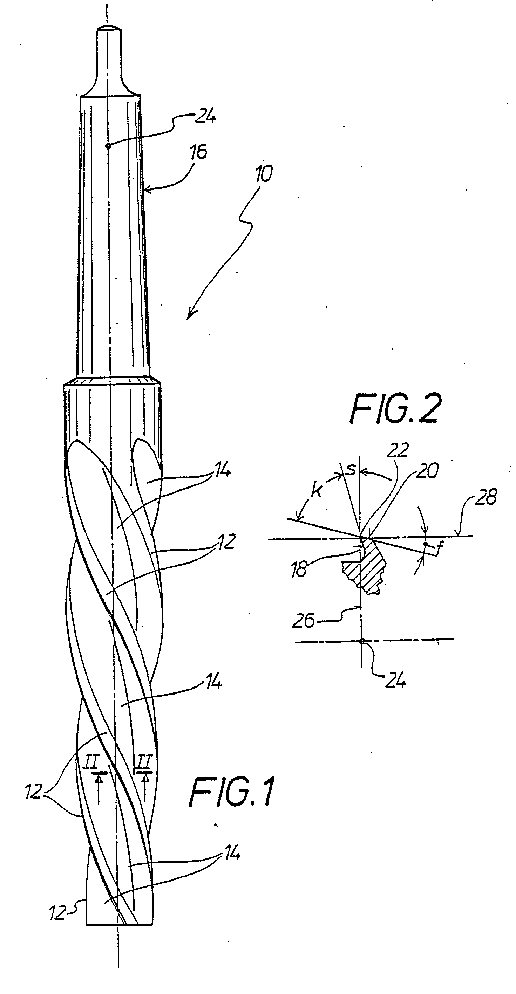

Figur 1 zeigt ein Werkzeug 10 in Form einer konischen Reibahle, die Schneidrippen 12 und Spanrillen 14 aufweist, die entlang des Umfangs des konischen Werkzeugs 10 abwechselnd vorgesehen sind. In Figur 1 ist ein Werkzeug 10 dargestellt, bei dem die Schneidrippen 12 und die Spanrillen 14 einen Drall aufweisen. Selbstverständlich kann das Werkzeug 10 auch mit Schneidrippen 12 bzw. Spanrillen 14 ausgebildet sein, die sich in Längsrichtung des Werkzeugs 10 geradlinig, d.h. ohne Drall, erstrecken. Mit der Bezugsziffer 16 ist ein Schaft des Werkzeugs 10 bezeichnet, mit dem das Werkzeug 10 in einer Werkzeughalteeinrichtung befestigbar ist.

Figur 2 zeigt einen Abschnitt einer Schneidrippe 12, die eine Spanfläche 18 und eine Freifläche 20 aufweisen. Die Spanfläche 18 und die Freifläche 20 schneiden sich in einer Schneidkante 22. An die Schneidkante 22 kann sich eine Rundschluffphase anschliessen. Durch die Schneidkante 22 und durch die zentrale Längsachse 24 (sh. auch Figur 1) verläuft eine erste Bezugsebene 26, die zur Zeichnungsebene der Figur 2 senkrecht steht. Eine zweite Bezugsebene 28 verläuft durch die Schneidkante 22 und zur Ersten Bezugsebene 26 senkrecht. Diese zweite Bezugsebene 28 steht zur Zeichnungsebene der Figur 2 wie die erste Bezugsebene 26 senkrecht. Die Freifläche 20 schliesst mit der zweiten Bezugsebene 28 einen Keilwinkel k ein. Die Spanfläche 18 schliesst mit der ersten Bezugsebene 26 einen Spanwinkel s ein. Die Spanfläche 18 und die Freifläche 20 schliessen miteinander einen Keilwinkel k ein.

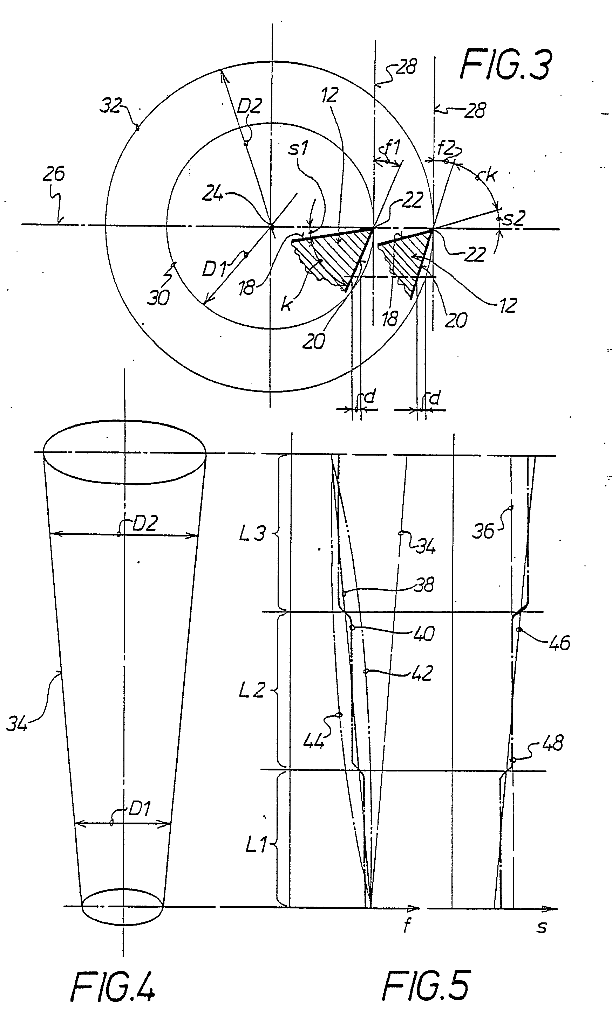

In Figur 3 ist ein erster Abschnitt einer Schneidrippe 12 kleinen Durchmessers und ein zweiter Abschnitt einer Schneidrippe 12 grossen Durchmessers angedeutet. Die Schneidrippe 12 kleinen Durchmessers D1 weist einen Freiwinkel f1 auf, der durch einen Abstand d zwischen der Freifläche 20 und der Kreislinie 30 bestimmt ist, die durch die Schneidkante 22 der Schneidrippe 12 kleinen Durchmessers D1 bestimmt ist. Der Freiwinkel f1 ist zwischen der Freifläche 20 und der zweiten Bezugsebene 28 festgelegt. Zur zweiten Bezugsebene 28 ist die erste Bezugsebene 26 senkrecht ausgerichtet, die durch die Schneidkante 22 und durch die zentrale Längsachse 24 hindurch verläuft. In dieser Figur steht die zentrale Längsachse 24 zur Zeichnungsebene senkrecht. Die Schneidrippe 23 kleinen Durchmessers D1 weist eine Spanfläche 18 auf, die mit der ersten Bezugsebe 26 einen Spanwinkel s1 einschliesst. Die Spanfläche 18 und die Freifläche 20 schliessen miteinander einen Keilwinkel k ein.

Die Schneidrippe 12 grossen Durchmessers D2 beschreibt mit ihrer Schneidkante 22 während einer Rotation des Werkzeugs 10 um die zentrale Längsachse 24 herum eine Kreisbahn entlang der Kreislinie 32. Diese Schneidrippe 12 wird derart gestaltet, dass ihre Freifläche 20 mit der Kreislinie 32 ebenfalls den Abstand d aufweist. Selbstverständlich werden die Abstände d der beiden Schneidrippen 12 unterschiedlichen Durchmessers D1 bzw. D2 im gleichen Abstand von der ersten Bezugsebene 26 definiert. Das bedeutet jedoch, dass der Freiwinkel f2 zwischen der Freifläche 20 und der zweiten Bezugsebene 28 der Schneidrippe 12 grossen Durchmessers D2 kleiner ist als der weiter oben beschriebene Freiwinkel f1. Wenn die Schneidrippe 12 grossen Durchmessers D2 denselben Keilwinkel k aufweist wie die Schneidrippe 12 kleinen Durchmessers D1, dann kann der Spanwinkel s2 zwischen der Spanfläche 18 und der ersten Bezugsebene 26 am Schneidrippenabschnitt grossen Durchmessers D2 um den gleichen Betrag grösser sein als der Spanwinkel s1, um den der Freiwinkel f2 kleiner ist als der Freiwinkel f1. Infolge des konstanten Keilwinkels k ergibt sich über die gesamte Länge jeder Schneidrippe 12 eine gleichmässige Abnutzung und damit eine gute Standzeit des Schneidwerkzeugs 10. Andererseits ergibt sich durch die Vergrösserung des Spanwinkels s eine Verbesserung der Spanabnahme und eine Verbesserung des Spanflusses über die Spanfläche 18 jeder Schneidrippe 12.

Figur 4 zeigt in einer räumlichen Darstellung die konische Mantelfläche 34, die von den Schneidkanten 22 der Schneidrippen 12 des konischen Werkzeugs 10 (sh. Figur 1) während einer Rotation des Werkzeugs 10 um seine zentrale Längsachse 24 herum festgelegt wird. Mit D1 ist ein relativ kleiner Durchmesser und mit D2 ist ein im Vergleich dazu vergleichsweise grosser Durchmesser des konischen Werkzeugs 10 bezeichnet.

Figur 5 zeigt in einer grafischen Darstellung den Zusammenhang zwischen dem Freiwinkel f und dem jeweiligen Durchmesser bzw. der Längserstreckung des Werkzeugs, und dem Zusammenhang zwischen dem Spanwinkel s jeder Schneidrippe 12 des Werkzeugs 10 in Abhängigkeit vom Durchmesser D bzw. in Abhängigkeit von der Längserstreckung des Werkzeugs 10. Mit je einer strichlierten Linie 34 bzw. 36 ist der Freiwinkel f bzw. der Spanwinkel s eines bekannten Werkzeugs der gattungsgemässen Art dargestellt. Wie aus der Linie 34 ersichtlich ist, nimmt bei einem bekannten Werkzeug der Freiwinkel mit grösser werdendem Durchmesser D zu. Der Spanwinkel s bleibt dabei entlang der Längserstreckung des Werkzeugs 10 konstant, wie durch die Linie 36 erkennbar ist. Im Vergleich dazu ändert sich der Freiwinkel f beim neu vorgeschlagenen Werkzeug 10 mit dem Durchmesser D des konischen Werkzeugs 10. Diese Änderung des Freiwinkels kann linear erfolgen, was durch die Linie 38 angedeutet ist, oder sie kann stufenweise erfolgen, was durch die strichlierte Linie 40 angedeutet ist. Selbstverständlich kann diese Änderung des Freiwinkels mit dem Durchmesser D auch beliebig anders erfolgen, was durch die beiden Linien 42 und 44 angedeutet ist. Entsprechend der Linie 38 nimmt der Freiwinkel f mit zunehmendem Durchmesser D linear ab. Die Linie 40 zeigt eine Abnahme des Freiwinkels f in Stufen, d.h. dass der Freiwinkel f entlang bestimmten Längsabschnitten L1, L2 und L3 konstant ist, wobei auch hier der Freiwinkel f im Abschnitt L1 kleinen Durchmesser D grösser ist als in den Abschnitten L2 und L3 grösserer Durchmesser D. Eine lineare Abnahme des Freiwinkels f gemäss Linie 38 bedeutet eine lineare Zunahme des Spanwinkels s von Abschnitten kleinen Durchmessers D zu Abschnitten grossen Durchmessers D des konischen Werkzeugs. Diese lineare Zunahme des Spanwinkels ist durch die Linie 46 angedeutet. Nimmt der Freiwinkel entsprechend der Linie 40 stufenweise von Abschnitten kleinen Durchmessers zu Abschnitten grossen Durchmessers ab, so nimmt der Spanwinkel s in entsprechender Weise stufenweise zu. Diese stufenweise Zunahme des Spanwinkels s ist in Figur 5 auf der rechten Seite durch die strichpunktierte Linie 48 angedeutet.

## Ansprüche

1. Werkzeug in Form eines konischen Bohrers bzw. insbesondere in Form einer konischen Reibahle, mit Schneidrippen (12), die mit ihren Schneidkanten (22) bei einer Rotation des Werkzeugs (10) um seine zentrale Längsachse (24) eine konische Mantelfläche (34) festlegen, und mit Spanrillen (14), wobei sich die Schneidrippen (12) und die Spanrillen (14) entlang des Umfangs des Werkzeugs (10) abwechseln, und jede Schneidrippe (12) eine Spanfläche (18) und eine Freifläche (20) aufweist, wobei sich die Spanfläche (18) und die Freifläche (20) in der gegebenenfalls mit einer Rundschliffphase versehenen Schneidkante (22) der entsprechenden Schneidrippe (12) schneiden und miteinander einen Keilwinkel (k) einschliessen, und die Spanfläche (18) mit einer sich durch die Längsachse (24) der Werkzeugs (10) und die entsprechende Schneidkante (22) erstreckenden ersten Bezugsebene (26) einen Spanwinkel (s) und die Freifläche (20) mit einer zur ersten Bezugsebene (26) senkrechten, sich durch die entsprechende Schneidkante (22) erstreckenden zweiten Bezugsebene (28) einen Freiwinkel (f) einschliesst,
**dadurch gekennzeichnet,**
dass der Freiwinkel (f) jeder Schneidrippe (12) vom sich in Längsrichtung des Werkzeugs (10) ändernden Durchmesser (d) der Mantelfläche (34) abhängig ist.

2. Werkzeug nach Anspruch 1,
**dadurch gekennzeichnet,**
dass der Freiwinkel (f) jeder Schneidrippe (12) zum jeweiligen Durchmesser (d) der Mantelfläche (34) umgekehrt proportional ist.

3. Werkzeug nach Anspruch 1,
**dadurch gekennzeichnet,**
dass der Freiwinkel (f) jeder Schneidrippe (12) innerhalb bestimmter Längsabschnitte (L1, L2, L3,...) des Werkzeugs (10) von einem Durchmesser (D) der Mantelfläche (34) dieses Abschnittes (L1,L2,L3,...) abhängig und konstant ist.

4. Werkzeug nach einem der vorhergehenden Ansprüche,
**dadurch gekennzeichnet,**
dass der Keilwinkel (k) jeder Schneidrippe (12) mindestens annähernd konstant ist, so dass der Spanwinkel (s) von dem sich im Längsrichtung des Werkzeugs (10) ändernden Durchmesser (D) der Mantelfläche (34) proportional abhängig ist.

*FIG.2*

*FIG.1*

FIG.3

FIG.4

FIG.5

## Europäisches Patentamt

# EUROPÄISCHER RECHERCHENBERICHT

Nummer der Anmeldung

| | EINSCHLÄGIGE DOKUMENTE | | EP 89102872.2 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | AT - B - 103 886 (WESSELMANN-BOHRER CO.)<br>* Gesamt *<br>-- | 1 | B 23 D 77/00<br>B 23 B 51/02 |
| A | GB - A - 155 004 (ROBERTSON)<br>* Gesamt *<br>---- | 1 | |

| | RECHERCHIERTE SACHGEBIETE (Int. Cl.4) |
|---|---|
| | B 23 D 77/00<br>B 23 B 51/00 |

Der vorliegende Recherchenbericht wurde für alle Patentansprüche erstellt.

| Recherchenort | Abschlußdatum der Recherche | Prüfer |
|---|---|---|
| WIEN | 27-04-1989 | KRUMPSCHMID |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82